(19) **Europäisches Patentamt / European Patent Office / Office européen des brevets**

(11) **EP 1 774 052 B1**

(12) **FASCICULE DE BREVET EUROPEEN**

(45) Date de publication et mention de la délivrance du brevet:
**01.03.2017 Bulletin 2017/09**

(21) Numéro de dépôt: **05788934.7**

(22) Date de dépôt: **06.07.2005**

(51) Int Cl.:
*C22C 38/60* [(2006.01)]  *C22C 38/42* [(2006.01)]
*C22C 38/44* [(2006.01)]  *C22C 38/58* [(2006.01)]
*C22C 38/46* [(2006.01)]  *C22C 38/00* [(2006.01)]
*B29C 33/38* [(2006.01)]

(86) Numéro de dépôt international:
**PCT/FR2005/001750**

(87) Numéro de publication internationale:
**WO 2006/016043 (16.02.2006 Gazette 2006/07)**

(54) **ACIER INOXYDABLE MARTENSITIQUE POUR MOULES ET CARCASSES DE MOULES D'INJECTION**

MARTENSITISCHER ROSTFREIER STAHL FÜR FORMEN UND SPRITZFORMRAHMEN

MARTENSITIC STAINLESS STEEL FOR MOULDS AND INJECTION MOULD FRAMES

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **12.07.2004 FR 0407764**

(43) Date de publication de la demande:
**18.04.2007 Bulletin 2007/16**

(73) Titulaire: **INDUSTEEL FRANCE**
**93200 Saint-Denis (FR)**

(72) Inventeurs:
• **BEGUINOT, Jean**
  **F-71200 LE CREUSOT (FR)**
• **BOUCHAUD, Frédéric**
  **F-71670 LE BREUIL (FR)**
• **PISSELOUP, Jean**
  **F-71710 SAINT SYMPHORIEN DE MARMAGNE (FR)**

(74) Mandataire: **Lavoix**
**2, place d'Estienne d'Orves**
**75441 Paris Cedex 09 (FR)**

(56) Documents cités:
**EP-A- 0 496 350     EP-A- 0 508 574**
**EP-A- 0 994 199     EP-A- 1 314 791**
**EP-A- 1 396 552     DE-A- 4 133 480**
**DE-C- 3 901 470     US-A1- 2002 162 614**
**US-A1- 2004 013 559     US-B2- 6 358 334**

• **PATENT ABSTRACTS OF JAPAN vol. 2000, no. 09, 13 octobre 2000 (2000-10-13) -& JP 2000 160297 A (NIPPON KOSHUHA STEEL CO LTD), 13 juin 2000 (2000-06-13)**
• **PATENT ABSTRACTS OF JAPAN vol. 2000, no. 21, 3 août 2001 (2001-08-03) -& JP 2001 107195 A (DAIDO STEEL CO LTD), 17 avril 2001 (2001-04-17)**
• **PATENT ABSTRACTS OF JAPAN vol. 1998, no. 09, 31 juillet 1998 (1998-07-31) -& JP 10 110248 A (HITACHI METALS LTD), 28 avril 1998 (1998-04-28)**
• **PATENT ABSTRACTS OF JAPAN vol. 1998, no. 14, 31 décembre 1998 (1998-12-31) -& JP 10 259458 A (NISSHIN STEEL CO LTD), 29 septembre 1998 (1998-09-29)**

EP 1 774 052 B1

**Description**

La présente invention est relative à un acier inoxydable martensitique pour la fabrication de moules et de carcasses de moules pour le moulage par injection de matières plastiques.

Le moulage par injection de matière plastique nécessite l'utilisation de moules et de carcasses de moules constitués d'acier à haute résistance mécanique capable de résister à des efforts importants résultant des fortes pressions d'injection. La fabrication des moules et des carcasses de moules implique de nombreuses et de longues opérations d'usinage, tels que le fraisage ou le perçage, de sorte qu'une bonne usinabilité de l'acier est nécessaire. En outre, les moules et les carcasses de moules ayant une fonction non seulement géométrique mais également de refroidissement des pièces moulées, l'acier dont ils sont constitués doit, de préférence, avoir une bonne conductivité thermique de façon à faciliter l'évacuation de la chaleur par conduction à travers les structures du moule. Enfin les moules doivent pouvoir résister à la corrosion qui peut être soit la corrosion par les matières plastiques injectées lorsque ces matières plastiques sont corrosives, soit la corrosion engendrée par les fluides de refroidissement dans les circuits de refroidissement, soit la corrosion par oxydation atmosphérique des empreintes polies des parties moulantes des moules.

Afin de répondre à l'ensemble de ces exigences, on cherche à utiliser des aciers à haute résistance qui soient également inoxydables. De ce point de vue, on est incité à rechercher des aciers inoxydables du type martensitique et plus particulièrement des aciers inoxydables du type martensitique des séries AISI 420 à 440 ou des aciers comparables à ces aciers.

Cependant ces aciers inoxydables martensitiques ont des teneurs en carbone relativement élevées, de l'ordre de 0,10 à 0,5 %, ou même plus, qui ont l'inconvénient de ne pas être très favorable à la résistance à la corrosion, et surtout d'être particulièrement défavorable aux opérations d'usinage. En outre, de trop fortes teneurs en carbone sont nuisibles à la soudabilité, or cette propriété est importante pour les pièces de moules, en particulier pour permettre la réparation par soudage de ces pièces lorsque des reprise d'usinage sont nécessaires.

Afin de remédier à ces divers inconvénients, il a été proposé, notamment dans le brevet US 6,358,334, un acier inoxydable martensitique destiné à la fabrication de moules pour moulages par injection de matière plastique, dont la teneur en carbone ne dépasse pas 0,08 %, et qui comporte une addition importante de soufre, de 0,06 à 0,3 % de façon à améliorer l'usinabilité. Cet acier qui contient essentiellement de 12 à 14 % de chrome, de 0,03 à 0,06 % de carbone, de 1 à 1,6 % de manganèse, de 0,25 à 1 % de silicium, de 0,01 à 0,1 % de vanadium, de 0,02 à 0,08 % d'azote, comporte, en outre, une addition de cuivre de 0,5 à 1,3 % destinée à améliorer la conductibilité thermique de l'acier. Cet acier dont les propriétés sont mieux adaptées à la fabrication de pièces pour moules ou de carcasses de moules, que les aciers inoxydables martensitiques des séries AISI 420 à 440, et qui a également une dureté de l'ordre de 300 HB environ, présente cependant un double inconvénient. D'une part, il est difficile à mettre en forme par laminage à chaud, car sa forgeabilité à chaud n'est pas très bonne. D'autre part, il n'est pas très facile de le recycler, car sa teneur en cuivre est sensiblement plus importante que la teneur en cuivre moyenne des chutes d'acier inoxydable.

US2002/0162614 A1 décrit un acier martensitique du type maraging, destiné à la fabrication de moules pour moulages par injection de matière plastique, avec une usinabilité améliorée, une bonne aptitude au soudage et une résistance élevée à la corrosion.

Le but de la présente invention est de remédier à ces inconvénients en proposant un acier inoxydable à hautes caractéristiques adapté à la fabrication de moules ou de carcasses de moules pour le moulage par injection de matière plastique, qui soit à la fois facile à usiner, facile à souder, qui résiste bien à la corrosion, qui a une bonne conductibilité thermique et qui pose peu de problème de fabrication, notamment peu de problème de forgeabilité et peu de problème de recyclage.

A cet effet, l'invention a pour objet une pièce de moules ou de carcasses de moules pour le moulage par injection de matières plastiques, en acier inoxydable martensitique dont la composition est constituée de, en % en poids :

$$0,02 \,\% \ \le \ C \ \le \ 0,09 \,\%$$

$$0,025 \,\% \ \le \ N \le \ 0,12 \,\%$$

$$Si \ \le \ 0,25 \ \%$$

avec

$$0,05 \leq C+N \leq 0,17\%$$

$$Al \leq 0,080\%$$

avec

$$Si + 23\,Al \geq 0,20\,\%$$

et

$$Si + 0,6\,Al \leq 0,25\,\%$$

et

$$0,00025 \leq Al \times N \leq 0,0020$$

$$0,55\,\% \leq Mn \leq 1,8\,\%$$

$$11,5\,\% \leq Cr \leq 16\,\%$$

éventuellement jusqu'à 0,48 % de cuivre, jusqu'à 0,90 % de la somme Mo + W/2, jusqu'à 0,90 % de nickel, jusqu'à 0,090 % de vanadium, jusqu'à 0,090 % de niobium, jusqu'à 0,025 % de titane, éventuellement jusqu'à 0,25 % de soufre, le reste étant du fer et des impuretés résultant de l'élaboration, la composition satisfaisant, en outre, la condition :

$$6,5 \leq F = (Cr + Mo) + 2\,(Si + V + Nb) - 27\,(C + N)$$
$$- (Ni + Mn/2 + Cu/3) \leq 13.$$

De préférence, la composition de l'acier inoxydable martensitique satisfait une ou plusieurs des conditions suivantes :

$$Cu \leq 0,4\,\%$$

$$Al \times N \geq 0,00050$$

De préférence, la compositions de l'acier inoxydable martensitique satisfait au moins l'une des conditions suivantes :

$$Ni \geq 0,10\,\%$$

$$V \geq 0,015\,\%$$

$$Mo + W/2 \geq 0,10\,\%$$

La composition de l'acier inoxydable martensitique peut satisfaire la condition :

$$7{,}0 \leq \mathbf{F} \leq 8{,}9$$

lorsqu'une très bonne aptitude au polissage est recherchée, ou satisfait la condition :

$$9{,}0 \leq \mathbf{F} \leq 11{,}5$$

dans les autres cas.

La pièce de moule ou de carcasse de moule pour injection de matière plastique est constituée d'un acier inoxydable martensitique selon l'invention, qui est trempé et revenu.

De préférence la structure de l'acier dont est constitué la pièce contient moins de 20% de ferrite δ, le reste étant de la martensite. Il est encore plus préférable que la structure de l'acier contienne moins de 10% de ferrite δ, le reste étant de la martensite.

L'invention va maintenant être décrite plus en détail mais de façon non limitative et illustrée par des exemples.

Les inventeurs ont constatés de façon nouvelle et inattendue que, dans des aciers inoxydables martensitiques, l'effet favorable du cuivre sur la conductibilité thermique pouvait être remplacé par une baisse significative de la teneur en silicium, et l'effet favorable du cuivre sur la corrosion pouvait être compensé par une augmentation de la teneur en molybdène ou en azote.

Partant de ces observations, les inventeurs ont constaté que l'on pouvait obtenir un acier inoxydable martensitique ayant des propriétés satisfaisantes pour la fabrication de pièces de moules, et également une bonne forgeabilité, en baissant significativement la teneur en cuivre, en baissant significativement la teneur en silicium et en ajoutant éventuellement du molybdène ou de l'azote ou une combinaison de ces deux éléments.

Compte tenu de ces observations, l'acier selon l'invention est un acier inoxydable de type martensitique dont la composition comprend en poids, les teneurs définies ci-dessous.

Plus de 0,02 %, de préférence plus de 0,03 %, de carbone, pour contribuer au durcissement, mais pas plus de 0,09 %, de préférence pas plus 0,06 %, et de préférence pas plus de 0,05 %, de carbone pour ne pas nuire à la résistance à la corrosion ;

Au moins 0,025 %, et de préférence au moins 0,035 %, d'azote pour améliorer la résistance mécanique de l'acier et sa résistance à la corrosion, mais moins de 0,12 %, et de préférence de moins de 0,10%, voire moins de 0,075 %, d'azote afin de réduire la tendance à la formation de nitrures de chrome indésirables ; ces nitrures de chrome étant fragilisants et tendant à réduire la teneur en chrome libre, ce qui est défavorable à la tenue à la corrosion ;

Les teneurs en carbone et azote sont ajustées de façon à ce que dans les limites qui viennent d'être définies, la somme des teneurs en carbone et azote soit supérieure ou égale à 0,05% et de préférence supérieure ou égale à 0,07 %, afin d'assurer une contribution suffisante au durcissement au revenu par formation de carbures et de nitrures, mais la somme des teneurs en carbone et azote ne doit pas dépasser 0,17 %, mieux 0,14 % et mieux encore 0,11 %, de façon à ne pas conduire à un durcissement excessif pour l'application considérée ici, à éviter de nuire à la ténacité et enfin à ne pas réduire la résistance à la corrosion de façon trop importante par abaissement local de la teneur en chrome partiellement fixé sous forme de carbonitrures.

Afin d'améliorer l'usinabilité, notamment en fraisage et en perçage, on peut ajouter du soufre, en particulier lorsque les exigences de qualité de surface (qualité de poli, ou surfaces grainées) ne sont pas élevées, notamment lorsque l'acier est utilisé pour fabriquer des carcasses de moules ou fabriquer des empreintes de moulage de matière plastique à faible exigence d'aspect. Dans ce cas la teneur en soufre doit, de préférence, être d'au moins 0,05 %, plus préférentiellement d'au moins 0,075 %, et mieux encore d'au moins 0,10 %. Cependant, les teneurs maximales en soufre doivent rester inférieures à 0,25 %, de préférence 0,20 %, et mieux encore 0,15 % afin de ne pas nuire à la forgeabilité de l'acier, à sa tenue à la corrosion et sa ténacité.

Le silicium et l'aluminium sont des éléments qui contribuent à assurer une bonne désoxydation du bain d'acier, et de ce point de vue, leur présence est souhaitable. En particulier il est nécessaire que les teneurs en silicium et en aluminium soient telles que Si + 23 x Al ≥ 0,20% et de préférence ≥ 0,35 %. Mais les inventeurs ont découvert que la réduction au niveau le plus bas possible de la teneur en silicium, et dans une moindre mesure de la teneur en aluminium, permet de compenser partiellement, mais de façon très significative, l'effet très défavorable d'une forte teneur en chrome sur la conductivité thermique de l'acier. Or cette mauvaise conductivité thermique des aciers à fort chrome est spécialement pénalisante dans les applications de moules pour le moulage par injection de matière plastique pour lesquelles l'évacuation efficace de la chaleur permettant de solidifier rapidement les pièces de matière plastique injectée constitue une des fonctionnalités importantes en service.

**EP 1 774 052 B1**

Afin d'obtenir une bonne conductivité thermique, il est donc souhaitable que les teneurs en silicium et en aluminium soient telles que : Si + 0,6 x Al ≤ 0,25 %, et mieux ≤ 0,17 %.

En outre, et afin d'assurer une aptitude au laminage ou au forgeage satisfaisante, c'est-à-dire conduisant à une amplitude de température de formage à chaud suffisamment large pour permettre en général un laminage en une seule chaude sans chauffage intermédiaire, les teneurs en aluminium et en azote doivent être telles que : Al ≤ 0,0020 / N, et de préférence ≤ 0,0010/ N. En outre, et afin de contrôler le grossissement du grain de façon à limiter la taille du grain lors du traitement thermique et ainsi assurer une taille de grain satisfaisante après avoir effectué le traitement de qualité, les teneurs en aluminium et azote doivent être telles que : Al ≥ 0,00025 / N et, de préférence ≥ 0,00050 / N.

Le manganèse est particulièrement souhaitable pour fixer le soufre sous forme de sulfures de manganèse afin de limiter le rôle défavorable du souffre sur la fragilité de l'acier. Pour cette raison la teneur en manganèse doit, de préférence, être telle que : Mn ≥ 0,3 % + 5 x S.

En outre, le manganèse augmente la trempabilité et réduit la teneur en ferrites dans la structure essentiellement martensitique obtenue après trempe.

Pour cette raison, la teneur en manganèse sera supérieure ou égale à 0,55 %, et mieux supérieure ou égale à 0,75 %, et mieux encore supérieure ou égale 1,05 %. Cependant lorsque la teneur en manganèse est trop élevée, cet élément détériore la ténacité. Aussi la teneur en manganèse devra rester inférieure ou égale à 1,8 %, et de préférence inférieure ou égale à 1,6 %.

La teneur en chrome, qui assure la résistance à la corrosion, devra être supérieure ou égale à 11,5 % et de préférence supérieure ou égale à 12 %. Cependant, et afin de limiter la présence dans les structures obtenues après trempe, de ferrite δ qui est un constituant doux, la teneur en chrome devra rester inférieure ou égale à 16 %, et de préférence inférieure ou égale à 15 %, mieux inférieure ou égale à 14 %, et mieux encore inférieure ou égale à 13 %.

La teneur en cuivre restera inférieure ou égale à 0,48 %, de préférence inférieure ou égale à 0,4 %, et pourra même être aussi faible que l'on souhaite, afin de ne pas détériorer l'aptitude à la déformation à chaud, et afin de conduire à des chutes moins difficilement recyclables.

Comme on l'a indiqué précédemment, bien que le cuivre ait un effet favorable sur la tenue à la corrosion et sur la teneur en ferrite delta, les inventeurs ont découvert qu'il était possible de conserver, voire même de renforcer, les avantages de la teneur élevée en cuivre, notamment en ajoutant du molybdène et en réduisant le plus possible la teneur silicium.

Cependant, le cuivre est souvent présent à titre de résiduel dans les ferrailles, si bien que, afin de limiter les surcoûts liés au tri des ferrailles nécessaire pour obtenir une teneur en cuivre très basse, on pourra admettre une teneur en cuivre apportée par les ferrailles supérieure à 0,1 %, voire supérieure à 0,2 %, voire même supérieure à 0,31 % et mieux encore, supérieure à 0,35 %.

Le molybdène a l'avantage d'améliorer la trempabilité, ce qui favorise l'obtention d'une microstructure martensitique souhaitable pour optimiser le compromis résistance à la traction/ tenacité.

Cet élément favorise également une forte résistance à l'adoucissement au revenu. Enfin, il contribue fortement à la résistance à la corrosion. Cependant il est très coûteux et favorise la formation de ferrite δ. Aussi, la teneur maximale en molybdène ne dépassera pas 0,90 % et de préférence pas 0,48 %, et mieux encore pas 0,35 %. La présence de cet élément n'est pas indispensable, et sa teneur minimale peut être simplement de 0 % ou des traces. Mais cependant, il préférable que la teneur minimale en molybdène soit d'au moins 0,10 % et de préférence au moins 0,20 % et mieux encore 0,30 %.

Le molybdène peut éventuellement être remplacé par du tungstène à raison de 2 % de tungstène pour 1 % de molybdène. Cependant il n'est pas souhaitable de remplacer le molybdène par le tungstène, en particulier du fait du coût du tungstène qui est particulièrement élevé.

De même, le cobalt, qui a un effet comparable, pourrait être ajouté. Mais ce n'est pas souhaitable, aussi la teneur en cet élément restera de préférence inférieure ou égale à 0,010 %. C'est-à-dire que cet élément restera à un état de trace ou d'impureté.

Le nickel est un élément favorable à la ténacité. D'autre part c'est un élément gammagène qui permet de compenser les effets d'éléments alphagènes ajoutés pour renforcer la résistance à la corrosion. Cet élément peut donc être ajouté, sans que sa présence soit obligatoire. Aussi, la teneur minimale en nickel peut être 0% ou de traces, mais il est avantageux que sa teneur soit supérieure ou égale à 0,10 % et mieux encore supérieure ou égale à 0,20 %. Cependant son coût élevé conduit à ne pas souhaiter une teneur supérieure à 0,90 %. De préférence la teneur en nickel restera inférieure ou égale à 0,48 %.

Le vanadium peut être présent à l'état de résiduel. Compte tenu de la teneur en chrome dans l'acier, l'élaboration par la voie classique au four électrique peut conduire à des teneurs résiduelles allant jusqu'à 0,05 % environ sans garantie de valeur minimale contrôlée. Toutefois, le vanadium peut éventuellement être utilisé comme addition contrôlée, pour sa fonction durcissante au revenu, avec une teneur minimale de 0,015 %. Néanmoins, en raison notamment de son coût et de son influence défavorable sur l'usinabilité, la teneur en vanadium ne doit pas dépasser 0,090 %.

Le niobium présente des effets analogues à celui du vanadium et, de la même façon, sa teneur ne doit pas dépasser 0,090 %. En outre cet élément est défavorable à la forgeabilité. De ce fait il est souhaitable que sa teneur reste inférieure à 0,020 %, et mieux inférieure à 0,010 %, et mieux encore que cet élément ne soit qu'à l'état de traces.

Bien que la présence de titane ne soit pas souhaitée en raison de la dureté des composants nitrurés ou carburés de titane qui peuvent nuire significativement à l'usinabilité, cet élément peut être ajouté de manière optionnelle pour assurer le contrôle du grossissement du grain au cours des traitements thermiques. Dans ce cas, la teneur en titane ne doit pas dépassée 0,025 % % et préférence devra être comprise entre 0,010 % et 0,020 %.

De plus, et afin que la taille des nitrures de titane soit faible et en particulier reste inférieure à 1 micron environ, il sera très souhaitable que le titane soit ajouté dans le bain d'acier liquide au moment de l'élaboration de manière progressive à partir de l'addition dans un laitier et par transfert très progressif en contact métal/nitrure.

Le reste de la composition est constitué de fer et d'impuretés.

Outre les conditions qui viennent d'être indiquées sur les teneurs en chacun des éléments, il est souhaitable que la composition soit ajustée de façon à limiter la teneur en ferrite $\delta$ qui n'est pas susceptible de se transformer en martensite et dont la présence est nuisible à la polissabilité, à la résistance et à la tenue à la corrosion. En particulier il est souhaitable que la proportion de ferrite $\delta$ reste inférieure ou égale à 20 % ou mieux encore inférieure ou égale à 10 % dans une structure principalement martensitique.

Pour cela, la composition doit satisfaire la condition suivante :

$$6,5 \leq F \leq 13$$

et de préférence $7,0 \leq F \leq 11,5$ ,
avec :

$$F = (Cr + Mo) + 2 (Si + V + Nb) - 27 (C + N) - (Ni + Mn/2 + Cu/3).$$

Dans ces limites, on peut distinguer deux sous domaines. D'une part, le sous domaine correspondant à F compris entre 7,0 et 8,9 qui est plus favorable à une bonne homogénéité du métal et à une bonne polissabilité, et d'autre part le domaine correspondant à F compris entre 9,0 et 11,5. Un compromis intéressant correspondant à 8,5 inférieur ou égal à F inférieur ou égal à 10,5.

D'une façon générale, cet acier est élaboré par les procédés connus, par exemple au four électrique. Eventuellement, pour ajouter du titane, on ajoute cet élément à un laitier et on assure un transfert du titane dans le bain d'acier liquide par le contact du métal laitier, l'acier liquide est coulé sous forme de brames ou de lingots que l'on met en forme à chaud, soit par laminage, soit par forgeage. On effectue alors un traitement thermique constitué d'une austénitisation à environ 950° suivie d'un refroidissement assurant la transformation de l'austénite en martensite (qui peut être un simple refroidissement à l'air pour des épaisseurs inférieures à 100 mm environ, ou tout autre moyen de trempe) et d'un revenu à une température préférentielle comprise entre 500°C et 550°C, afin d'obtenir une dureté comprise entre 250HB et 400HB et typiquement, autour de 300HB. Puis, on usine les pièces de moule ou de carcasse de moule.

A titre d'exemple, on peut réaliser les aciers dont les compositions chimiques sont reportées au tableau 1.

| C | Si | Al | Mn | Ni | Cr | Mo | Cu | N | V | Nb | S | ferrite delta (%) | dureté Hb | conductivité therm | indice tenue corrosion |
|---|---|---|---|---|---|---|---|---|---|---|---|---|---|---|---|
| 0,041 | 0,42 | 0,027 | 1,15 | 0,25 | 12,7 | 0,015 | 0,85 | 0,051 | 0,045 | 0 | 0,14 | 8 | 310 | 22,2 | 15,1 |
| 0,039 | 0,09 | 0,035 | 1,41 | 0,27 | 12,7 | 0,017 | 0,42 | 0,047 | 0,04 | 0 | 0,12 | 6 | 300 | 25,4 | 14,6 |
| 0,042 | 0,19 | 0,028 | 1,44 | 0,29 | 12,7 | 0,24 | 0,42 | 0,052 | 0,04 | 0 | 0,1 | 8 | 325 | 24,0 | 15,5 |
| 0,039 | 0,11 | 0,025 | 1,39 | 0,34 | 12,5 | 0,27 | 0,38 | 0,053 | 0,04 | 0 | 0,14 | 6 | 330 | 25,1 | 15,4 |
| 0,04 | 0,1 | 0,007 | 1,25 | 0,32 | 13,1 | 0,28 | 0,41 | 0,053 | 0,04 | 0 | 0,045 | 10 | 325 | 24,9 | 16,0 |
| 0,039 | 0,21 | 0,011 | 1,41 | 0,27 | 12,3 | 0,53 | 0,35 | 0,053 | 0,043 | 0 | 0.12 | 8 | 340 | 24,0 | 16,0 |
| 0,042 | 0,085 | 0,027 | 1,4 | 0,27 | 13,1 | 0,49 | 0,39 | 0,054 | 0,035 | 0 | 0,16 | 10 | 335 | 24,7 | 16,7 |
| 0,033 | 0,15 | 0,015 | 1,25 | 0,3 | 14 | 0,85 | 0,18 | 0,041 | 0,033 | 0,035 | 0,15 | 14 | 340 | 23,4 | 18,2 |
| 0,051 | 0,09 | 0,033 | 1,38 | 0,33 | 12,2 | 0,22 | 0,37 | 0,059 | 0,03 | 0,04 | 0,15 | 4 | 330 | 25,6 | 15,1 |
| 0,05 | 0,12 | 0,02 | 1,35 | 0,7 | 13,2 | 0,75 | 0,27 | 0,049 | 0,035 | 0,051 | 0,17 | 8 | 350 | 23,6 | 17,4 |
| 0,042 | 0,06 | 0,035 | 1,1 | 0,25 | 12,9 | 0,37 | 0,25 | 0,052 | 0,037 | 0,025 | 0,1 | 8 | 325 | 26,1 | 15,9 |
| 0,052 | 0,11 | 0,022 | 1,45 | 0,8 | 12,1 | 0,25 | 0,43 | 0,068 | 0,027 | 0,023 | 0,12 | 0 | 330 | 24,5 | 15,4 |
| 0,078 | 0,095 | 0,02 | 1,39 | 0,75 | 12,3 | 0,23 | 0,38 | 0,072 | 0,025 | 0 | 0,17 | 0 | 345 | 24,7 | 15,6 |

Dans ce tableau on a également reporté des pourcentages de ferrite δ obtenue, la dureté HB obtenue après un traitement thermique de revenu à 520°C, la conductivité thermique de l'acier, et un indice de corrosion égal à :

$$Cr + 3,3\ Mo + Cu + 30N.$$

Dans ce tableau, l'acier de la première ligne est un acier de comparaison correspondant à l'art antérieur, et les autres aciers sont des aciers conforment à l'invention.

Comme on peut le constater sur le tableau, la teneur en ferrite δ reste toujours inférieure à 20 %, et se situe en général autour de 10 % comme pour l'acier de l'art antérieur. La dureté HB de l'acier varie de 300 HB à 350 HB, l'indice de tenue à la corrosion varie de 14,6 à 18,2, cette dernière valeur étant très sensiblement supérieur à l'indice de tenue à la corrosion de l'acier de comparaison. Enfin, la conductivité thermique varie de 23,4 à 26,1 W/m/°C, ce qui, dans tous les cas, est supérieur, voire sensiblement supérieur, à la conductivité thermique de l'acier de comparaison. En outre, la mise en oeuvre de l'acier suivant l'invention se fait sans aucune difficulté de mise en forme à chaud, la forgeabilité étant toujours très satisfaisante. On notera que les teneurs en cuivre qui restent inférieures ou égales à 0,43 % se rapprochent des teneurs qui deviennent classiques dans les ferrailles, ce qui permet de recycler sans difficultés les chutes de l'acier selon l'invention.

## Revendications

1.   Pièce de moule ou de carcasse de moule pour le moulage par injection de matières plastiques, en acier inoxydable martensitique trempé et revenu dont la composition est constituée de, en % en poids :

$$0,02\ \% \le C \le 0,09\ \%$$

$$0{,}025\ \%\ \le\ N\ \le\ 0{,}12\ \%$$

avec

$$0{,}05\ \%\ \le\ C + N\ \le\ 0{,}17\ \%$$

$$Al\ \le\ 0{,}080\ \%$$

avec

$$Si + 23\ Al\ \ge\ 0{,}20\ \%$$

et

$$Si + 0{,}6\ Al\ \le\ 0{,}25\ \%$$

et

$$0{,}00025\ \le\ Al \times N\ \le\ 0{,}0020$$

$$0{,}55\ \le\ Mn\ \le\ 1{,}8\ \%$$

$$11{,}5\ \%\ \le\ Cr\ \le\ 16\ \%$$

- éventuellement jusqu'à 0,48 % de cuivre, jusqu'à 0,90 % de la somme Mo + W/2, jusqu'à 0,90 % de nickel, jusqu'à 0,090 % de vanadium, jusqu'à 0,090 % de niobium, jusqu'à 0,025 % de titane, éventuellement jusqu'à 0,25 % de soufre,

le reste étant du fer et des impuretés résultant de l'élaboration, la composition satisfaisant, en outre, la condition :

$$6{,}5 \le\ \mathbf{F} = (Cr + Mo) + 2\ (Si + V + Nb) - 27\ (C + N) - (Ni + Mn/2 + Cu/3) \le\ 13.$$

2. Pièce selon la revendication 1, **caractérisée en ce que** :

$$Cu\ \le\ 0{,}4\ \%$$

3. Pièce selon l'une quelconque des revendication 1 à 2, **caractérisée en ce que** :

$$Al \times N\ \ge\ 0{,}00050$$

4. Pièce selon l'une quelconque des revendications 1 à 3, **caractérisée en ce que** la composition satisfait au moins l'une des conditions suivantes :

$$Ni\ \ge\ 0{,}10\ \%$$

$$V \geq 0,015\ \%$$

$$Mo + W/2 \geq 0,10\ \%$$

**5.** Pièce selon l'une quelconque des revendications 1 à 4, **caractérisée en ce que** la composition satisfait la condition :

$$7,0 \leq \mathbf{F} \leq 8,9$$

**6.** Pièce selon l'une quelconque des revendications 1 à 4, **caractérisée en ce que** la composition satisfait la condition :

$$9,0 \leq \mathbf{F} \leq 11,5$$

**7.** Pièce selon l'une quelconque des revendications 1 à 6, **caractérisée en ce que** :

$$Nb < 0,020\ \%$$

**8.** Pièce selon l'une quelconque des revendications 1 à 7, **caractérisée en ce que** la structure de l'acier contient moins de 20% de ferrite $\delta$, le reste étant de la martensite.

**9.** Pièce selon la revendication 8, **caractérisée en ce que** la structure de l'acier contient moins de 10% de ferrite $\delta$, le reste étant de la martensite.

**10.** Pièce selon l'une quelconque des revendications 1 à 9, **caractérisée en ce que** :

$$C + N \leq 0,14\ \%.$$

**Patentansprüche**

**1.** Form- oder Spritzformrahmenteil zum Spritzgießen von Kunststoffmaterialien aus gehärtetem und angelassenem martensitischem rostfreiem Stahl, dessen Zusammensetzung besteht aus, in Gew.-%:

$$0,02\ \% \leq C \leq 0,09\ \%$$

$$0,025\ \% \leq N \leq 0,12\ \%$$

mit

$$0,05\ \% \leq C + N \leq 0,17\ \%$$

$$Al \leq 0,080\ \%$$

mit

$$Si + 23\,Al \geq 0,20\,\%$$

und

$$Si + 0,6\,Al \leq 0,25\,\%$$

und

$$0,00025 \leq Al \times N \leq 0,0020$$

$$0,55 \leq Mn \leq 1,8\,\%$$

$$11,5\,\% \leq Cr \leq 16\,\%$$

- eventuell bis 0,48 % Kupfer, bis 0,90 % der Summe Mo + W/2, bis 0,90 % Nickel, bis 0,090 % Vanadium, bis 0,090 % Niobium, bis 0,025 % Titan, eventuell bis 0,25 % Schwefel,

wobei der Rest Eisen und Unreinheiten sind, die aus der Herstellung resultieren, wobei die Zusammensetzung ferner der Bedingung entspricht:

$$6,5 \leq \mathbf{F} = (Cr + Mo) + 2\,(Si + V + Nb) - 27\,(C + N) - (Ni + Mn/2 + Cu/3) \leq 13.$$

2. Teil nach Anspruch 1, **dadurch gekennzeichnet, dass**:

$$Cu \leq 0,4\,\%.$$

3. Teil nach einem der Ansprüche 1 bis 2, **dadurch gekennzeichnet, dass**:

$$Al \times N \geq 0,00050.$$

4. Teil nach einem der Ansprüche 1 bis 3, **dadurch gekennzeichnet, dass** die Zusammensetzung mindestens eine der folgenden Bedingungen erfüllt:

$$Ni \geq 0,10\,\%$$

$$V \geq 0,015\,\%$$

$$Mo + W/2 \geq 0,10\,\%.$$

5. Teil nach einem der Ansprüche 1 bis 4, **dadurch gekennzeichnet, dass** die Zusammensetzung die Bedingung erfüllt:

$$7,0 \leq F \leq 8,9.$$

6. Teil nach einem der Ansprüche 1 bis 4, **dadurch gekennzeichnet, dass** die Zusammensetzung die Bedingung erfüllt:

$$9{,}0 \leq F \leq 11{,}5.$$

7. Teil nach einem der Ansprüche 1 bis 6, **dadurch gekennzeichnet, dass**:

$$Nb < 0{,}020\ \%.$$

8. Teil nach einem der Ansprüche 1 bis 7, **dadurch gekennzeichnet, dass** die Struktur des Stahls weniger als 20 % Ferrit $\delta$ enthält, wobei der Rest Martensit ist.

9. Teil nach Anspruch 8, **dadurch gekennzeichnet, dass** die Struktur des Stahls weniger als 10 % Ferrit $\delta$ enthält, wobei der Rest Martensit ist.

10. Teil nach einem der Ansprüche 1 bis 9, **dadurch gekennzeichnet, dass**:

$$C + N \leq 0{,}14\ \%.$$

**Claims**

1. Mould component or mould frame component for the injection-moulding of plastics materials, which component is composed of quenched and tempered martensitic stainless steel whose composition consists of, in % by weight:

$$0.02\ \% \ \leq\ C\ \leq\ 0.09\ \%$$

$$0.025\ \% \ \leq\ N \leq 0.12\ \%$$

with

$$0.05\ \% \ \leq\ C + N\ \leq\ 0.17\ \%$$

$$Al\ \leq\ 0.080\ \%$$

with

$$Si + 23\,Al\ \geq\ 0.20\ \%$$

and

$$Si + 0.6\,Al\ \leq\ 0.25\ \%$$

and

$$0.00025\ \leq\ Al \times N\ \leq\ 0.0020$$

$$0.55 \leq \text{Mn} \leq 1.8 \,\%$$

$$11.5 \,\% \leq \text{Cr} \leq 16 \,\%$$

- optionally up to 0.48 % of copper, up to 0.90 % of the sum Mo + W/2, up to 0.90 % of nickel, up to 0.090 % of vanadium, up to 0.090 % of niobium, up to 0.025 % of titanium, optionally up to 0.25 % of sulphur,

the balance being iron and impurities resulting from the production operation, the composition also satisfying the condition:

$$6.5 \leq \mathbf{F} = (\text{Cr} + \text{Mo}) + 2\,(\text{Si} + \text{V} + \text{Nb}) - 27\,(\text{C} + \text{N}) - (\text{Ni} + \text{Mn}/2 + \text{Cu}/3) \leq 13.$$

2. Component according to claim 1, **characterized in that**:

$$\text{Cu} \leq 0.4 \,\%.$$

3. Component according to any one of claims 1 or 2, **characterized in that**:

$$\text{Al} \times \text{N} \geq 0.00050.$$

4. Component according to any one of claims 1 to 3, **characterized in that** the composition satisfies at least one of the following conditions:

$$\text{Ni} \geq 0.10 \,\%$$

$$\text{V} \geq 0.015 \,\%$$

$$\text{Mo} + \text{W}/2 \geq 0.10 \,\%.$$

5. Component according to any one of claims 1 to 4, **characterized in that** the composition satisfies the condition:

$$7.0 \leq \mathbf{F} \leq 8.9.$$

6. Component according to any one of claims 1 to 4, **characterized in that** the composition satisfies the condition:

$$9.0 \leq \mathbf{F} \leq 11.5.$$

7. Component according to any one of claims 1 to 6, **characterized in that**:

$$\text{Nb} < 0.020 \,\%.$$

8. Component according to any one of claims 1 to 7, **characterized in that** the structure of the steel contains less than 20% of $\delta$ ferrite, the balance being martensite.

9. Component according to claim 8, **characterized in that** the structure of the steel contains less than 10% of $\delta$ ferrite, the balance being martensite.

**10.** Component according to any one of claims 1 to 9, **characterized in that**:

$$C + N \leq 0.14 \%.$$

**EP 1 774 052 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6358334 B
- US 20020162614 A1